# EUROPEAN PATENT SPECIFICATION

(11) **EP 2 357 549 B1**
(45) Date of publication and mention of the grant of the patent: **23.07.2014**
(21) Application number: 10153373.5
(22) Date of filing: 11.02.2010
(51) Int. Cl.: G06F 3/044

(54) **Capacitive touch sensitive overlay including touch sensor and electronic device including same**
Kapazitiver berührungsempfindliche Überlagerung mit Berührungssensor und elektronische Vorrichtung damit
Superposition capacitive sensible au toucher et dispositif électronique la comprenant

(43) Date of publication of application: 17.08.2011
(73) Proprietor: BlackBerry Limited, Waterloo, ON N2K 0A7 (CA)
(72) Inventor: Tong, Kuo-Feng, Waterloo Ontario N2L 3W8 (CA); Pereverzev, Stanislav, Sunnyvale, CA 94089 (US); Golovchenko, Mykola, Sunnyvale, CA 94089 (US)
(74) Representative: Fennell, Gareth Charles

(56) References cited:
- EP-A1- 2 065 794
- US-A- 6 147 680
- US-A1- 2007 074 914
- US-A1- 2007 271 399

## Description

### FIELD OF TECHNOLOGY

The present disclosure relates to portable electronic devices, including portable electronic devices having touch screen displays.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

United States Patent Application 2007/0271399 discloses a touchpad with interleaved conductive traces across a touch- pad surface. Each conductive trace has a first end and a second end. The width of the first end is larger than the width of the second end. The interleaved conductive traces have a first group of conductive traces alternated with a second group of conductive traces.

European Patent Application 2,065,794 discloses a touch sensor for mounting over a display screen of an electronic device. The touch sensor includes: an elongate input pad formed in a layer of transparent conductive material on a transparent substrate, the input pad tapering from a broad end to a narrow end to provide an input pad capacitance that varies with location of a touch over the input pad; and, a contact for coupling the input pad to a processor.

United States Patent Application 2007/0074914 discloses a capacitive touch sensing system that includes a touch surface and sets of substantially parallel electrodes arranged in relation to the touch surface. Each electrode set includes a primary electrode electrically connected to at least two sub-electrodes. The primary electrode is capable of producing greater capacitive coupling to a touch in proximity with the touch surface in relation to capacitive coupling of the at least two sub-electrodes. The sub-electrodes of the electrode sets are arranged in an interleaved pattern configured to increase an effective area of capacitive coupling associated with each electrode set.

United States Patent 6,147,680 discloses a unique layout with a matrix of traces having at least traces in one direction provided with portions which are interleaved with portions of adjacent traces. Unlike the prior art zigzag pattern, the extensions of the traces of the present invention are actually interleaved, so that they overlap with portions of the adjacent trace. Thus, a finger moving from one trace to the next will contact the interleaved portions of the adjacent trace before it leaves the interleaved portions of the first trace.

Improvements in devices with touch-sensitive displays are desirable.

### BRIEF DESCRIPTION OF THE DRAWINGS

FIG. 1 is a block diagram of a portable electronic device in accordance with the disclosure.
FIG. 2 is a front view of a portable electronic device in accordance with the disclosure.
FIG. 3 is a cross-sectional side view of a touch-sensitive display of the portable electronic device through line 220 of FIG. 2 in accordance with the disclosure.
FIG. 4 is a top view of an example of the touch sensor arrangement of the touch-sensitive display of FIG. 3 in accordance with the disclosure.
FIG. 5 is a top view of another example of the touch sensor arrangement of the touch-sensitive display of FIG. 3 in accordance with the disclosure.
FIG. 6 is a top view of another example of the touch sensor arrangement of the touch-sensitive display of FIG. 3 in accordance with the disclosure.
FIG. 7 is a top view of yet another example of the touch sensor arrangement of the touch-sensitive display of FIG. 3 in accordance with the disclosure.

### DETAILED DESCRIPTION

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

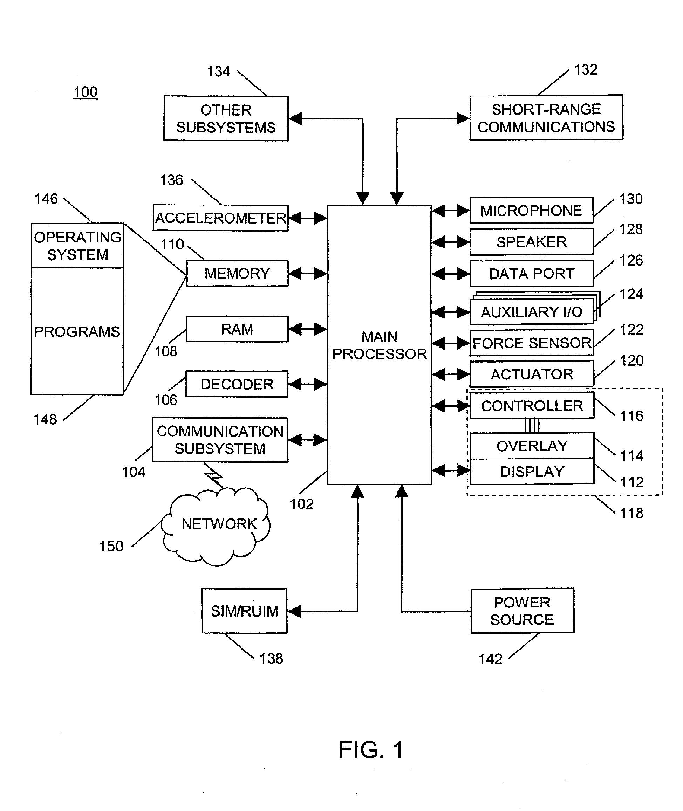

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

One or more touches, also known as touch contacts or touch events, may be detected by the touch-sensitive display 118. The processor 102 may determine attributes of the touch, including a location of a touch. A signal is provided to the controller 116 in response to detection of a touch.

The actuator(s) 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback.

A mechanical dome switch actuator may be utilized. In this example, tactile feedback is provided when the dome collapses due to imparted force and when the dome returns to the rest position after release of the switch.

Alternatively, the actuator 120 may comprise one or more piezoelectric (piezo) devices that provide tactile feedback for the touch-sensitive display 118. Contraction of the piezo actuator(s) applies a spring-like force, for example, opposing a force externally applied to the touch-sensitive display 118. Each piezo actuator includes a piezoelectric device, such as a piezoelectric (PZT) ceramic disk adhered to a substrate that may be comprised of metal. The substrate bends when the piezo device contracts due to build up of charge/voltage at the piezo device or in response to a force, such as an external force applied to the touch-sensitive display 118. The charge/voltage may be adjusted by varying the applied voltage or current, thereby controlling the force applied by the piezo devices. The charge/voltage on the piezo actuator may be removed by a controlled discharge current that causes the piezo device to expand, releasing the force thereby decreasing the force applied by the piezo devices. The charge/voltage may advantageously be reduced over a relatively short period of time to provide tactile feedback to the user. Absent an external force and absent a charge/voltage on the piezo device, the piezo devicek may be slightly bent due to a mechanical preload.

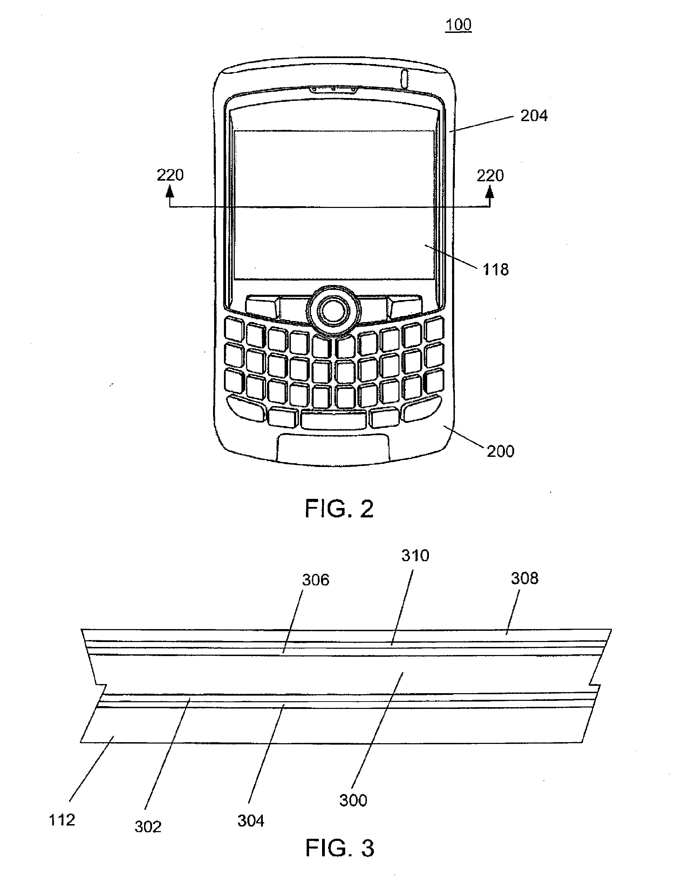

A front view of a portable electronic device 100 is shown in FIG. 2. The portable electronic device 100 includes a housing 200 that houses the internal components that are shown in FIG. 1 and frames the touch-sensitive display 118 such that an outer surface of the touch-sensitive display 118 is accessible for user-interaction.

The touch-sensitive overlay 114 is shown as a capacitive touch-sensitive overlay 114. The capacitive touch-sensitive overlay 114 comprises, for example, a number of layers in a stack and may be fixed to the display 112 via a suitable optically clear adhesive such as Optically Clear Laminating Adhesive available from 3M Company. A sectional side view of an example of the touch-sensitive display 118 (not to scale) is shown in FIG. 3. The cross-hatching provided in FIG. 3 is intended to illustrate different portions of the touch-sensitive overlay 114 and is not indicative of the material utilized to construct those portions. A substrate 300 that may be rigid is disposed on the display 112, with a shield 302 and a barrier 304 between the substrate 300 and the display 112. One or more capacitive touch sensors are disposed on the substrate 300 and a cover 308 may be adhered to the capacitive touch sensor arrangement 306.

The substrate 300 is a transparent plate, for example, comprised of polyethylene terephthalate (polyester), glass, or other suitable dielectric sheet. The shield 302 may be comprised of suitable material such as indium tin oxide (ITO) applied to the substrate 300, for example, by sputter coating onto the substrate 300. The shield 302 may be connected to a ground or voltage supply or active drive circuit for shielding the capacitive touch sensor arrangement 306 from the display 112. The barrier 304 may be a thin film deposited non-conductive material, such as silicon dioxide or other material that electrically isolates the shield 302 from the display 112. The barrier 304 may be deposited on the shield 302, for example, by physical vapor deposition. The capacitive touch sensor arrangement 306 may be disposed in a single layer or plane, without jumpers or bridges, i.e., conductors to the controller 116 are electrically isolated from each other, and no conductor crosses under or over any other conductor. The capacitive touch sensor arrangement 306 may comprise, for example, ITO. The transparent cover 308 provides a protective covering and may comprise, for example, a transparent polymer disposed on the surface of the capacitive touch sensor arrangement 306, for example, with a suitable optically clear adhesive 310. Alternatively, the transparent cover 308 may comprise a coating on the capacitive touch sensor arrangement 306, for example, a spray coating.

The capacitive touch sensor arrangement 306 generates and provides signals to the controller 116 as a result of capacitive coupling with a suitable object, which coupling results in a change in the electric field of the touch sensors of the capacitive touch sensor arrangement 306 as known in the art. The suitable object may be, for example, a finger, thumb, appendage, or other items, for example, a stylus, pen, or other pointer. Coordinate values, such as x and y coordinates that represent a location of one or more aspects of a touch event, are determined from these signals.

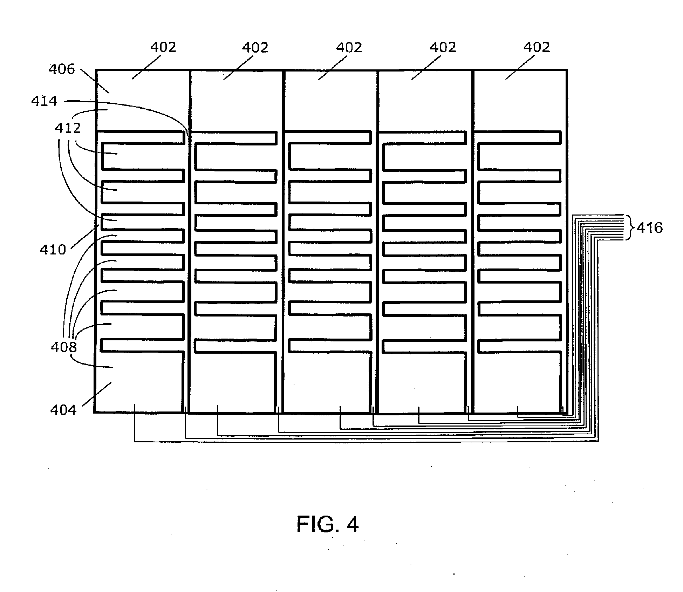

One example of a capacitive touch sensor arrangement 306 is shown in FIG. 4. Two touch sensors 404, 406 are paired in each of several regions 402 that are shown parallel to each other. The sensors 404, 406 are advantageously arranged the same way in each region 402. Each touch sensor 404, 406 is shown in a crenellated arrangement, i.e., with several fingers or teeth separated by gaps similar to a comb. One end of the sensor 404 is at or near one end of the region 402, and one end of the sensor 046 is at or near another, opposing end of the region 402, as shown in FIG. 4. The sensor 404 is shown with several rectangular fingers 408 connected by narrow traces 410 along one side of the sensor 404. Another sensor is also shown with several rectangular fingers 412 connected by narrow traces 414 along one side of the sensor 404. The two sensors 404, 406 have the same shape, and one is rotated 180 degrees with respect to the other, and thus are complementary shapes. The fingers 408 of one sensor 404 are disposed in the gaps between the fingers 412 of the other sensor 406, and the fingers 408, 412 are thus interleaved. The dark lines in the figure illustrate the space between the sensors 404, 406 and between regions 402. An electrical conductor 416 connects each touch sensor 404, 406 to the controller 116. Each touch sensor 404 is electrically isolated from the other touch sensor 406 in the same region 402. A touch-sensitive display 118 may include one or more regions 402 of touch sensors 404, 406. Each touch sensor is electrically isolated from all other touch sensors when multiple regions 402 of touch sensors 404, 406 are implemented.

The sensors 404, 406 are shown with varying widths of fingers and gaps. The width of the fingers is wider and one end of a sensor and are progressively narrower toward the opposite end of the sensor until the center of the sensor, while the gaps between the fingers are the same size. From the center of the sensor to the opposite end, the fingers have the same width, while the gaps between the fingers are progressively wider. For example, the lower touch sensor 404 has wider fingers 408 near the bottom of FIG. 4, which progressively narrow until the center, above which the fingers have generally the same width as the gaps are progressively larger at the top of FIG. 4. The upper touch sensor 406 has wider fingers 408 near the top of FIG. 4, which progressively narrow until the center, below which the fingers have generally the same width as the gaps are progressively larger at the bottom of FIG. 4. As a result of this arrangement, one touch sensor 404 covers a majority of the area at the bottom of each region 402, and the other touch sensor 406 covers a majority of the area at the top of each region 402.

Capacitive coupling with each of the touch sensors 404, 406 is relative to the area of the touch sensor 404, 406 that detects the touch. For example, capacitive coupling increases with area of the touch sensor 404, 406 at which the touch is detected. The signal from each touch sensor 404, 406 to the controller 116 varies based on the area of the touch sensor 404, 406 at which the touch is detected.

A touch close to the bottom of a region 402 is detected by a larger area of the lower touch sensor 404 than the upper touch sensor 406. Similarly, a touch close to the top of a region 402 is detected by a larger area of the upper touch sensor 406 than the lower sensor 404. Further, the ratio of the area of the lower touch sensor 404 to the area of the upper touch sensor 406 that detects a touch decreases with distance from the bottom of a region. Based on the signals received at the controller 116, the ratio of the area of the lower touch sensor 404 to the upper touch sensor 406 that detects a touch may be determined, and the distance of the touch from the first end 412 may be established. The x and y coordinates of the touch on the touch-sensitive display 118 may be determined based on signals from the touch sensors 404, 406. One coordinate is determined based on which of the touch sensors 404, 406 register the touch and the ratio of touch sensors in adjacent parallel regions 402. The other coordinate is determined based on the ratio of the area of the one touch sensor 404 to the area of the other touch sensor 406 that detects the touch. Relations other than ratios may be utilized.

For example, when a touch is detected only by the touch sensors 404, 406 from only one region 402 of the touch-sensitive display 118, such as the region 402 on the far left side of FIG. 4, the location of the touch is determined to fall within that region 402. When the touch is located in one region 402, the x coordinate is estimated to be the center, along the x-axis, of the region 402. The x coordinate for a touch located in the far left region 402 is determined to be the middle, along the x-axis, of the far left region 402. The y coordinate is determined based on the ratio of the signal from the touch sensor 404 to the signal from the touch sensor 406 within the far left region 402. In another example, when a touch is detected by touch sensors 404, 406 in two adjacent regions 402, the x coordinate may be determined, for example, based on a ratio of the signals from the touch sensors 404 and 406 in one region 402 to the signals from the touch sensors 404 and 406 in the adjacent region 402. The y coordinate may be determined, for example, based on a ratio of the signal from one touch sensor 404 to the other touch sensor 406 within either of the two regions 402, i.e., the ratio of signals from touch sensors 404, 406 in one of the regions 402. Alternatively, the relations from both regions may be utilized by addition, combination, averaging, and so forth.

A touch may be registered by more than two touch sensors 404, 406, for example, when the touch overlaps two adjacent regions 402. The coordinates of such a touch are determined based on signals from each of the touch sensors 404, 406 in the two adjacent regions 402. The coordinates of each touch on the touch-sensitive display 118 may be determined when multiple touches occur simultaneously in different regions 402.

The sensor fingers 408, 412 may be any suitable shape. For example, the fingers 408, 412 may be rounded at the ends rather than rectangular in shape, i.e., with square corners, or the fingers 408, 412 may be triangular in shape. The fingers 508, 510 may have curved or other non-linear edges.

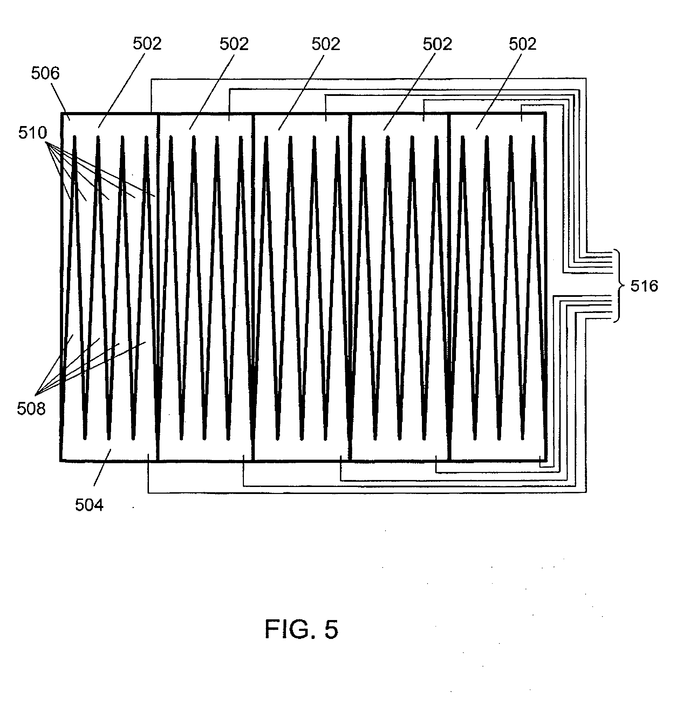

Another example of a capacitive touch sensor arrangement 306 is shown in FIG. 5. Two touch sensors 504, 506 are paired in each of several regions 502 that are shown parallel to each other. The sensors 504, 506 are advantageously arranged the same way in each region 502. Each touch sensor 504, 506 is shown with several fingers 508, 510 that extend from a common area at an end of the region 502. One sensor 504 is shown with several fingers 508 that extend from a common area at or near one end of the region 502. The fingers 508 of the sensor 504 are wider at the common area and narrow with distance from the common area to a point. The other sensor 506 is shown with several fingers 510 that extend from a common area at or near the other end of the region 502, and the width of each of the fingers 510 of the sensor 506 is wider at the common area and narrow with distance from the common area to a point. The fingers 508 of one sensor 504 are disposed in the gaps between the fingers 510 of the other sensor 506, and the fingers 508, 510 are thus interleaved. The dark lines in the figure illustrate the space between the sensors 504, 506 and between regions 502. As a result of this arrangement, one touch sensor 504 covers a majority of the area at the bottom of each region 402, and the other touch sensor 506 covers a majority of the area at the top of each region 502. An electrical conductor 516 connects each touch sensor 504, 506 to the controller 116. Each touch sensor 504 is electrically isolated from the other touch sensor 506 in the same region 502.

Capacitive coupling with each of the touch sensors 504, 506 is relative to the area of the touch sensor 504, 506 that detects the touch. For example, capacitive coupling increases with area of the touch sensor 504, 506 at which the touch is detected. The signal from each touch sensor 504, 506 to the controller 116 varies based on the area of the touch sensor 504, 506 at which the touch is detected.

A touch close to the bottom of a region 502 is detected by a larger area of the lower touch sensor 504 than the upper touch sensor 506. Similarly, a touch close to the top of a region 502 is detected by a larger area of the upper touch sensor 506 than the lower touch sensor 504. Further, the ratio of the area of the lower touch sensor 504 to the area of the upper touch sensor 506 that detects a touch decreases with distance from the bottom of a region. Based on the signals received at the controller 116, the ratio of the area of the lower touch sensor 504 to the area of the upper touch sensor 506 that detects a touch may be determined, and the distance of the touch from the first end 510 may be established. The x and y coordinates of the touch on the touch-sensitive display 118 may be determined based on signals from the touch sensors 504, 506. One coordinate is determined based on which of the touch sensors 504, 506 register the touch and the ratio of touch sensors in adjacent parallel regions 502. The other coordinate is determined based on the ratio of the area of the one touch sensor 504 to the area of the other touch sensor 506 that detects the touch. Relations other than ratios may be utilized.

A touch may be registered by more than two touch sensors 504, 506, for example, when the touch overlaps two adjacent regions 502. The coordinates of such a touch are determined based on signals from each of the touch sensors 504, 506 in the two adjacent regions 502. The coordinates of each touch on the touch-sensitive display 118 may be determined when multiple touches occur simultaneously in different regions 502.

The sensor fingers 508, 510 may be any suitable shape. For example, the fingers 508, 510 may be rounded or squared at the ends rather than ending at a point. The fingers 508, 510 may have curved or other non-linear edges.

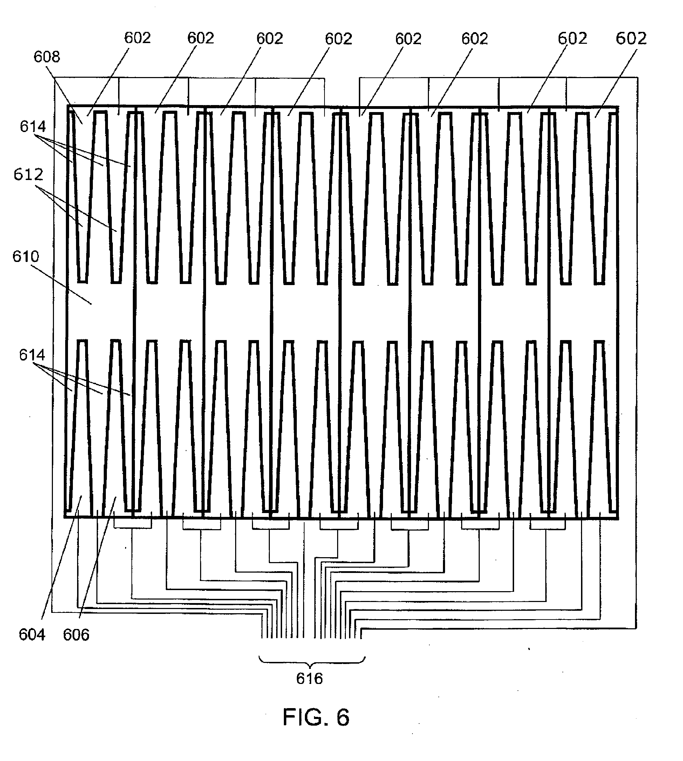

Another example of a capacitive touch sensor arrangement 306 is shown in FIG. 6. Four touch sensors 604, 606, 608, 610 are grouped in each of several regions 602 that are shown parallel to each other. The sensors 604, 606, 608, 610 are advantageously arranged the same way in each region 602. Two of the touch sensors 604, 606 are adjacent to each other and extend from one end of the region 602, with ends of the touch sensors 604, 606 at or near one end of the region 602. The two touch sensors 604, 606 are shown with a single finger that is wider at the end and narrows with distance from the end. Another touch sensor 608 includes two fingers 612 that extend from a common area at or near the opposite end of the region 602. The fingers 612 of the sensor 608 are wider at the common area and narrow with distance from the common area. The narrowest ends of the lower touch sensors 604, 606 are spaced from the narrowest ends of the fingers 612 of the touch sensor 608, for example, by about 5 millimeters. The middle touch sensor 610 in each region 602 includes several fingers 614 extending upwardly and several fingers 614 extending downwardly from a common area in the center of the region 602. The fingers 612, 604 are interleaved with the fingers 614 of the middle touch sensor 610. The dark lines in the figure illustrate the space between the sensors 604, 606, 608, 610 and between regions 602.

An electrical conductor 616 connects each touch sensor 604, 606, 608, 610 to the controller 116. Conductors 616 also connect the lower touch sensor 606 of each of region 602 with the lower touch sensor 604 of the adjacent region 602. Fewer conductors extend from the capacitive touch sensor arrangement 306 by connecting the lower touch sensor 606 with the lower touch sensor 604 of the adjacent region. The lower touch sensor 606 is not connected to the lower touch sensor 604 of the same region in the example shown in FIG. 6, to facilitate connection of conductors to the middle touch sensor 610 in each region. The touch sensor 604 in the first region, shown on the left in the figure, is not connected to any other touch sensor. The touch sensor 606 in the last region 602, shown on the right in the figure, is not connected to any other touch sensor. The touch sensors 608 at the top of each of the regions 602 are connected together by electrical conductors. The middle touch sensor 610 in each region 602 is not connected to any other touch sensor, electrically isolating each of these touch sensors 610.

A touch on the touch-sensitive display 118 may be detected by more than one of the touch sensors 604, 606, 608, 610 and based on the signals received at the controller 116 from each of the touch sensors 604, 606, 608, 610, the x and y coordinates of the touch on the touch-sensitive display 118 may be determined. One coordinate is determined based on which of the touch sensors 610 register the touch and the relation of signals from the sensors 610 in adjacent parallel regions 602. The other coordinate is determined based on the areas of each of the touch sensors 604, 606, 608, 610 that detect the touch.

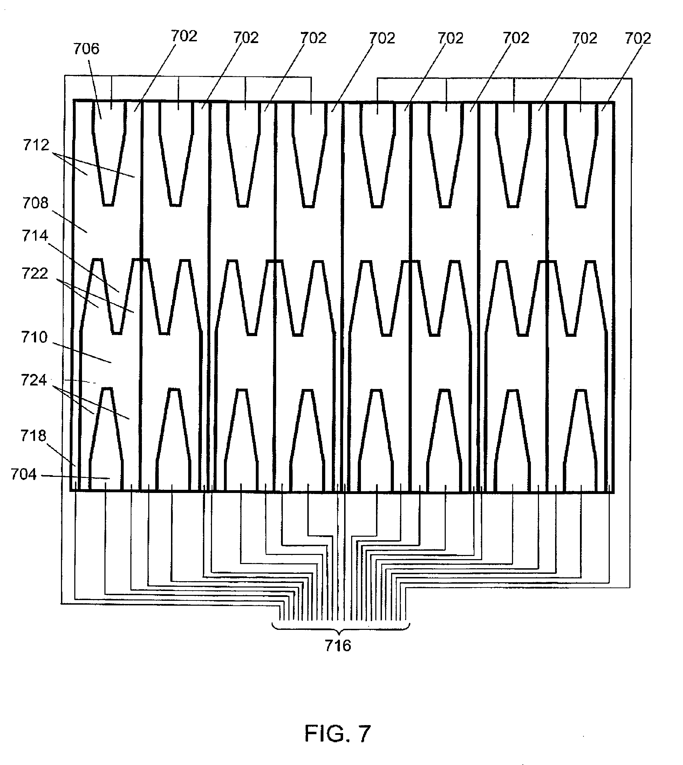

Another example of a capacitive touch sensor arrangement 306 is shown in FIG. 7. Four touch sensors 704, 706, 708, 710 are grouped in each of several regions 702. The sensors 704, 706, 708, 710 in each region are advantageously arranged as mirror images of sensors 704, 706, 708, 710 in each adjacent region 702. The dark lines in the figure illustrate the space between the sensors 704, 706, 708, 710 and between regions 702.

Two touch sensors 704, 706 are shown comprising a single finger. One touch sensor 704 extends from one end of the region 702 with an end of the touch sensor 704 at or near the end of the region 702, and another touch sensor 706 extends from the opposite end of the region 702 with an end of the touch sensor 706 at or near the opposite end of the region 702. The touch sensors 704, 706 have the same shape and are oriented vertically as mirror images. Each of the touch sensors 704, 706 includes a first area with substantially parallel sides and a second area in which the width varies, narrowing with distance from the first area. The touch sensors 704, 706 as shown extend less than half way along the length of the region 702. The first area of each of the fingers 706 may extend, for example, about 2 to about 3 millimeters in length and the second area may extend, for example, about 5 to about 6 millimeters in length. The narrowest end of the touch sensor 704 may be spaced from the narrowest end of the touch sensor 706, for example, by a distance of about 12 to about 15 millimeters.

An additional touch sensor 708 includes a central area that extends across the width of the region 702 and fingers 712 that extend from the central area to the end of the region and between each vertical side of the touch sensor 706 and the outer edge of the region 702. A finger 714 extends from the central area in the opposite direction of the fingers 712. The width of the finger 714 is wider at the central area and narrows with distance from the central area. A narrow trace 718 extends along one side of the region 702 from the central area to the bottom of the region.

The touch sensor 710 includes a generally central, or common, area and four fingers 722, 724 extending from the central area. Two fingers 722 extend upwardly along but not touching the finger 714 of the other sensor 708 and two fingers 724 extend downwardly along but not touching the finger 704 of the other sensor 708. The fingers of the touch sensors 704, 706, 708, 710 are thus interleaved.

An electrical conductor connects each touch sensor 704, 706, 708, 710 to the controller 116. The touch sensors 706 of all the regions 702 are connected together. Each of the touch sensors 704, 708, 710 are not connected to any other touch sensor, electrically isolating each of the touch sensors 704, 708, 710. Few electrical conductors or traces are utilized for routing along edges of the touch-sensitive overlay, reducing the space occupied by such traces and providing space for wider traces that reduce electrostatic discharge susceptibility.

Capacitive coupling with each of the touch sensors 704, 706, 708, 710 is related to the area of the touch sensor 704, 706, 708, 710 that detects the touch. The signal from each touch sensor 704, 706, 708, 710 to the controller varies based on the area of the touch sensor 704, 706, 708, 710 that detects the touch. A touch may be registered by more than two touch sensors 704, 706, 708, 710 and, based on the signals received at the controller 116 from each of the touch sensors 604, 606, 608, 610, the x and y coordinates of the touch on the touch-sensitive display 118 may be determined. One coordinate is determined based on which of the touch sensors 704, 708, 710 register the touch and the relation of signals from the sensors 704, 708, 710 in adjacent parallel regions 702. The other coordinate is determined based on the areas of each of the touch sensors 704, 706, 708, 710 that detect the touch.

The terms "bottom" and "top" and "upper" and "lower" and "vertical" are utilized in the disclosure for reference in the drawings only and are not otherwise limiting. The shapes of features, including the touch sensors, are described herein for the purpose of providing examples. Other shapes of touch sensors may fall within the scope of the present disclosure. The touch sensors may be implemented to provide a portrait or landscape orientation for a display, a square display, or any other shape of display with appropriate modifications to the size/shape of the touch sensors.

While transmission of light is generally good with capacitive touch-sensitive displays a desire for increased resolution of such displays drives further improvements in touch-sensitive displays. Functionality of such overlays and accuracy of detection of location of touch remains important. The touch-sensitive overlay, according to the present disclosure, includes a single capacitive touch sensor layer for determination of both x and y touch location. A single layer does not require jumpers or bridges, i.e., conductors to the controller 116 are electrically isolated from each other, and no conductor crosses under or over any other conductor. This arrangement reduces the number of layers for determination of touch location, thereby facilitating improved optical performance of a touch-sensitive display as fewer layers on the display are utilized for touch sensing. Furthermore, fewer conductors or traces are utilized for routing along edges of the touch-sensitive overlay, reducing the space occupied by such traces and providing space for wider traces that reduce electrostatic discharge susceptibility. The absence of crossing traces leads to higher manufacturing yield, and higher reliability.

A touch-sensitive overlay includes a substrate, and a capacitive touch sensor arrangement comprising a first touch sensor and a second touch sensor disposed on the substrate in a region and arranged and constructed such that a coordinate of the touch is determined based on a relation of signals from at least the first and the second touch sensors, wherein the first touch sensor is electrically isolated from the second touch sensor.

An electronic device includes a housing, a display exposed by the housing, a touch-sensitive overlay disposed on the display, the touch-sensitive overlay comprising a substrate, and a capacitive touch sensor arrangement comprising a first touch sensor and a second touch sensor disposed on the substrate in a region and arranged and constructed such that a coordinate of the touch is determined based on a relation of signals from at least the first and the second touch sensors, wherein the first touch sensor is electrically isolated from the second touch sensor, and a processor operably coupled to the display and the overlay.

While the embodiments described herein are directed to particular implementations of the portable electronic device and the method of controlling the portable electronic device, modifications and variations may occur to those skilled in the art. For example, other arrangements of sensor fingers may be possible. All such modifications and variations are believed to be within the sphere and scope of the present disclosure. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A touch-sensitive overlay comprising:
a substrate (300);
a capacitive touch sensor arrangement (306) disposed in a single layer on the substrate (300) to determine coordinate values of a touch, the capacitive touch sensor arrangement (306) comprising at least a first region and an adjacent second region said at least first region and second region being rectangular and parallel to each other, each of the first and second regions comprising:
a first touch sensor (404) comprising a plurality of joined fingers (408) and a second touch sensor (406) comprising a plurality of joined fingers (412);
wherein the fingers of the first touch sensor (404) are interleaved with the fingers of the second touch sensor (406) and a ratio of an area of the first touch sensor (404) of a region to an area of the second touch sensor (406) of said region varies with distance from a first end of said region ;
wherein the first and second touch sensor (404, 406) are:
electrically isolated from each other;
arranged and constructed such that the first and second coordinate values of the touch are determined based on a relation of signals from at least the first and the second touch sensors (404, 406);
wherein, when the touch is detected by the first and second touch sensors (404, 406) of the first region and the first and second touch sensors (404, 406) of the second region, the first coordinate of the touch is determined based on a ratio of the signal from the first touch sensor (404) to the signal from the second touch sensor (406) within one of the first and second regions said ratio of the signals corresponding to the ratio of an area of the first touch sensor to an area of the second touch sensor and the second coordinate of the touch is determined based on a relation of the signals from the first touch sensor (404) and the second touch sensor (404) of the first region to the signals
from the first touch sensor (404) and the second touch sensor (406) in the adjacent second region.

2. An electronic device comprising:
a housing (200);
a display (112) exposed by the housing (200);
a touch-sensitive overlay (114) disposed on the display, the touch-sensitive overlay (114) comprising:
a substrate (300);
a capacitive touch sensor arrangement (306) disposed in a single layer on the substrate (300) to determine first and second coordinate values of a touch, comprising:
at least a first region (402) and an adjacent second region (402) said at least first region and second region being rectangular and parallel to each other, wherein the first and second regions each comprise a first touch sensor (404) comprising a plurality of joined fingers (408) and a second touch sensor (406) comprising a plurality of joined fingers (412);
wherein the fingers of the first touch sensor (404) are interleaved with the fingers of the second touch sensor (406) and a ratio of an area of the first touch sensor (404) of a region to an area of the second touch sensor (406) of said region varies with distance from a first end of said region ;
wherein the first and second touch sensors (404, 406) are:
electrically isolated from each other;
arranged and constructed such that the first and second coordinate values of the touch are determined based on a relation of signals from at least the first and the second touch sensors (404, 406);
a processor (102) operably coupled to the display (112) and the overlay;
wherein, when the touch is detected by the first and second touch sensors (404, 406) of the first region and the first and second touch sensors (404, 406) of the second region, the first coordinate of the touch is determined based on a ratio of the signal from the first touch sensor (404) to the signal from the second touch sensor (406) within one of the first and second regions said ratio of the signals corresponding to the ratio of an area of the first touch sensor to an area of the second touch sensor and the second coordinate of the touch is determined based on a relation of the signals from the first touch sensor (404) and the second touch sensor (406) of the first region to the signals from the first touch sensor (404) and the second touch sensor (406) in the adjacent second region.

3. The device according to claim 1 or claim 2, wherein, for each of the first and second regions (402), the first touch sensor (404) extends from a first end of the region (402) and the second touch sensor (406) extends from a second end of the region (402).

4. The device according to claim 1 or claim 2, wherein, for each of the first and second regions (402), the first touch sensor (404) covers a majority of an area at a first end of the region (402) and the second touch sensor (406) covers a majority of an area at a second end of the region (402).

5. The device according to claim 1 or claim 2, wherein, for each of the first and second regions (402), fingers (408, 412) of the first touch sensor (404) and the second touch sensor (406) extend across a majority of a width of the region (402).

6. The device according to claim 1 or claim 2, wherein, for each of the first and second regions (402), spacing between the fingers (408) of the first touch sensor (404) increases with distance from a first end of the region (402) and spacing between fingers (412) of the second touch sensor (406) increases with distance from a second end of the region (402).

7. The device according to claim 1 or claim 2, wherein, for each of the first and second regions (402), at least one finger (408) of the first touch sensor (404) extends from a first end of the region (402).

8. The device according to claim 1 or claim 2, wherein, for each of the first and second regions (402), a first finger (408) of the first touch sensor (404) is wider at a first end of the finger (408) than at a second end of the finger (408).

9. The device according to claim 1 or claim 2, wherein each of the first and second regions (402) comprises a third touch sensor (604) that is electrically isolated from the first touch sensor (404) and the second touch sensor (406).

10. The device according to claim 9, wherein each of the first and second regions (402) comprises a fourth touch sensor (606) that is electrically isolated from the first touch sensor (404), the second touch sensor (406), and the third touch sensor (604).

11. The device according to claim 1 or claim 2, comprising a first conductor (416) electrically isolated from a second conductor (416), wherein the first conductor (416) connects the first touch sensor (404) of the first region (402) to a controller (116) and the second conductor (416) connects the second touch sensor (406) of the first region (402) to the controller (116), wherein the first conductor (416) does not cross under the second conductor (416), and wherein the first conductor (416) does not cross over the second conductor (416).

## Patentansprüche

1. Eine berührungsempfindliche Überlagerung, die aufweist:
ein Substrat (300);
eine kapazitive Berührungssensoranordnung (306), die in einer einzelnen Schicht auf dem Substrat (300) angeordnet ist, um Koordinatenwerte einer Berührung zu bestimmen, wobei die kapazitive
Berührungssensoranordnung (306) zumindest einen ersten Bereich und einen angrenzenden zweiten Bereich aufweist, wobei der zumindest erste Bereich und der zweite Bereich rechteckig und parallel zueinander sind,
wobei jeder der ersten und zweiten Bereiche aufweist:
einen ersten Berührungssensor (404), der eine Vielzahl von verbundenen Fingern (408) aufweist, und einen zweiten Berührungssensor (406), der eine Vielzahl von verbundenen Fingern (412) aufweist;
wobei die Finger des ersten Berührungssensors (404) mit den Fingern des zweiten Berührungssensors (406) verschachtelt sind und ein Verhältnis einer Fläche des ersten Berührungssensors (404) eines Bereichs zu einer Fläche des zweiten Berührungssensors (406) dieses Bereichs mit einer Entfernung von einem ersten Ende des Bereichs variiert;
wobei der erste und der zweite Berührungssensor (404, 406):
elektrisch voneinander isoliert sind;
angeordnet und konstruiert sind derart, dass die ersten und zweiten Koordinatenwerte der Berührung basierend auf einer Beziehung von Signalen von zumindest den ersten und zweiten Berührungssensoren (404, 406) bestimmt werden;
wobei, wenn die Berührung von den ersten und zweiten Berührungssensoren (404, 406) des ersten Bereichs und den ersten und zweiten Berührungssensoren (404, 406) des zweiten Bereichs erfasst wird, die erste Koordinate der Berührung bestimmt wird basierend auf einem Verhältnis des Signals von dem ersten Berührungssensor (404) zu dem Signal von dem zweiten Berührungssensor (406) innerhalb eines des ersten und zweiten Bereichs, wobei das Verhältnis der Signale dem Verhältnis eines Bereichs des ersten Berührungssensors zu einem Bereich des zweiten Berührungssensors entspricht, und die zweite Koordinate der Berührung bestimmt wird basierend auf einer Beziehung der Signale von dem ersten Berührungssensor (404) und dem zweiten Berührungssensor (406) des ersten Bereichs zu den Signalen von dem ersten Berührungssensor (404) und dem zweiten Berührungssensor (406) in dem angrenzenden zweiten Bereich.

2. Elektronische Vorrichtung, die aufweist:
ein Gehäuse (200);
eine Anzeige (112), die durch das Gehäuse (200) freigelegt ist;
eine berührungsempfindliche Überlagerung (114), die auf der Anzeige angeordnet ist, wobei die berührungsempfindliche Überlagerung (114) aufweist:
ein Substrat (300);
eine kapazitive Berührungssensoranordnung (306), die in einer einzelnen Schicht auf dem Substrat (300) angeordnet ist, um erste und zweite Koordinatenwerte einer Berührung zu bestimmen, die aufweist:
zumindest einen ersten Bereich (402) und einen angrenzenden zweiten Bereich (402), wobei der zumindest erste Bereich und der zweite Bereich rechteckig und parallel zueinander sind, wobei die ersten und zweiten Bereiche jeweils einen ersten Berührungssensor (404), der eine Vielzahl von verbundenen Fingern (408) aufweist, und einen zweiten Berührungssensor (406) aufweisen, der eine Vielzahl von verbundenen Fingern (412) aufweist;
wobei die Finger des ersten Berührungssensors (404) mit den Fingern des zweiten Berührungssensors (406) verschachtelt sind und ein Verhältnis einer Fläche des ersten Berührungssensors (404) eines Bereichs zu einer Fläche des zweiten Berührungssensors (406) dieses Bereichs mit einer Entfernung von einem ersten Ende des Bereichs variiert;
wobei der erste und der zweite Berührungssensor (404, 406):
elektrisch voneinander isoliert sind;
angeordnet und konstruiert sind derart, dass die ersten und zweiten Koordinatenwerte der Berührung basierend auf einer Beziehung von Signalen von zumindest den ersten und zweiten Berührungssensoren (404, 406) bestimmt werden;
einen Prozessor (102), der betriebsfähig mit der Anzeige (112) und der Überlagerung gekoppelt ist;
wobei, wenn die Berührung von den ersten und zweiten Berührungssensoren (404, 406) des ersten Bereichs und den ersten und zweiten Berührungssensoren (404, 406) des zweiten Bereichs erfasst wird, die erste Koordinate der Berührung bestimmt wird basierend auf einem Verhältnis des Signals von dem ersten Berührungssensor (404) zu dem Signal von dem zweiten Berührungssensor (406) innerhalb eines des ersten und zweiten Bereichs, wobei das Verhältnis der Signale dem Verhältnis eines Bereichs des ersten Berührungssensors zu einem Bereich des zweiten Berührungssensors entspricht, und die zweite Koordinate der Berührung bestimmt wird basierend auf einer Beziehung der Signale von dem ersten Berührungssensor (404) und dem zweiten Berührungssensor (406) des ersten Bereichs zu den Signalen von dem ersten Berührungssensor (404) und dem zweiten Berührungssensor (406) in dem angrenzenden zweiten Bereich.

3. Die Vorrichtung gemäß Anspruch 1 oder Anspruch 2, wobei, für jeden der ersten und zweiten Bereiche (402), der erste Berührungssensor (404) sich von einem ersten Ende des Bereichs (402) erstreckt und der zweite Berührungssensor (406) sich von einem zweiten Ende des Bereichs (402) erstreckt.

4. Die Vorrichtung gemäß Anspruch 1 oder Anspruch 2, wobei, für jeden der ersten und zweiten Bereiche (402), der erste Berührungssensor (404) einen Großteil einer Fläche an einem ersten Ende des Bereichs (402) abdeckt und der zweite Berührungssensor (406) einen Großteil einer Fläche an einem zweiten Ende des Bereichs (402) abdeckt.

5. Die Vorrichtung gemäß Anspruch 1 oder Anspruch 2, wobei sich, für jeden der ersten und zweiten Bereiche (402), Finger (408, 412) des ersten Berührungssensors (404) und des zweiten Berührungssensors (406) über einen Großteil einer Breite des Bereichs (402) erstrecken.

6. Die Vorrichtung gemäß Anspruch 1 oder Anspruch 2, wobei, für jeden der ersten und zweiten Bereiche (402), ein Abstand zwischen den Fingern (408) des ersten Berührungssensors (404) mit einer Entfernung von einem ersten Ende des Bereichs (402) zunimmt und ein Abstand zwischen den Fingern (412) des zweiten Berührungssensors (406) mit einer Entfernung von einem zweiten Ende des Bereichs (402) zunimmt.

7. Die Vorrichtung gemäß Anspruch 1 oder Anspruch 2, wobei sich, für jeden der ersten und zweiten Bereiche (402), zumindest ein Finger (408) des ersten Berührungssensors (404) von einem ersten Ende des Bereichs (402) erstreckt.

8. Die Vorrichtung gemäß Anspruch 1 oder Anspruch 2, wobei, für jeden der ersten und zweiten Bereiche (402), ein erster Finger (408) des ersten Berührungssensors (404) an einem ersten Ende des Fingers (408) breiter ist als an einem zweiten Ende des Fingers (408).

9. Die Vorrichtung gemäß Anspruch 1 oder Anspruch 2, wobei jeder der ersten und zweiten Bereiche (402) einen dritte Berührungssensor (604) aufweist, der von dem ersten Berührungssensor (404) und dem zweiten Berührungssensor (406) elektrisch isoliert ist.

10. Die Vorrichtung gemäß Anspruch 9, wobei jeder der ersten und zweiten Bereiche (402) einen vierten Berührungssensor (606) aufweist, der von dem ersten Berührungssensor (404), dem zweiten Berührungssensor (406) und dem dritten Berührungssensor (604) elektrisch isoliert ist.

11. Die Vorrichtung gemäß Anspruch 1 oder Anspruch 2, die einen ersten Leiter (416) aufweist, der von einem zweiten Leiter (416) elektrisch isoliert ist, wobei der erste Leiter (416) den ersten Berührungssensor (404) des ersten Bereichs (402) mit einer Steuervorrichtung (116) verbindet, und der zweite Leiter (416) den zweiten Berührungssensor (406) des ersten Bereichs (402) mit der Steuervorrichtung (116) verbindet, wobei der erste Leiter (416) nicht unter dem zweiten Leiter (416) kreuzt, und wobei der erste Leiter (416) nicht über dem zweiten Leiter (416) kreuzt.

## Revendications

1. Elément de superposition tactile comprenant :
un substrat (300) ;
un agencement de capteurs tactiles capacitifs (306) disposé en une couche unique sur le substrat (300) pour déterminer les valeurs de coordonnées d'un contact, l'agencement de capteurs tactiles capacitifs (306) comprenant au moins une première région et une deuxième région adjacente, lesdites au moins première région et deuxième régions étant rectangulaires et parallèles l'une à l'autre, chacune des première et deuxième régions comprenant :
un premier capteur tactile (404) comprenant une pluralité de doigts joints (408) et un deuxième capteur tactile (406) comprenant une pluralité de doigts joints (412) ;
dans lequel les doigts du premier capteur tactile (404) sont entrelacés avec les doigts du deuxième capteur tactile (406) et un rapport entre une aire du premier capteur tactile (404) d'une région et une aire du deuxième capteur tactile (406) de ladite région varie avec la distance par rapport à une première extrémité de ladite région ;
dans lequel les premier et deuxième capteurs tactiles (404, 406) sont :
isolés électriquement l'un de l'autre ;
agencés et construits de sorte que les première et deuxième valeurs de coordonnées du contact soient déterminées sur la base d'une relation entre les signaux provenant desdits au moins premier et deuxième capteurs tactiles (404, 406) ;
dans lequel, lorsque le contact est détecté par les premier et deuxième capteurs tactiles (404, 406) de la première région et les premier et deuxième capteurs tactiles (404, 406) de la deuxième région, la première coordonnée du contact est déterminée sur la base d'un rapport entre le signal provenant du premier capteur tactile (404) et le signal provenant du deuxième capteur tactile (406) dans l'une des première et deuxième régions, ledit rapport entre les signaux correspondant au rapport entre une aire du premier capteur tactile et une aire du deuxième capteur tactile, et la deuxième coordonnée du contact est déterminée sur la base d'une relation entre les signaux provenant du premier capteur tactile (404) et du deuxième capteur tactile (406) de la première région et les signaux provenant du premier capteur tactile (404) et du deuxième capteur tactile (406) dans la deuxième région adjacente.

2. Dispositif électronique comprenant :
un logement (200) ;
un afficheur (112) exposé par le logement (200) ;
un élément de superposition tactile (114) disposé sur l'afficheur, l'élément de superposition tactile (114) comprenant :
un substrat (300) ;
un agencement de capteurs tactiles capacitifs (306) disposé en une couche unique sur le substrat (300) pour déterminer les première et deuxième valeurs de coordonnées d'un contact, comprenant :
au moins une première région (402) et une deuxième région adjacente (402), lesdites au moins une première région et deuxième région étant rectangulaires et parallèles l'une à l'autre, dans lequel les première et deuxième régions comprennent chacune un premier capteur tactile (404) comprenant une pluralité de doigts joints (408) et un deuxième capteur tactile (406) comprenant une pluralité de doigts joints (412) ;
dans lequel les doigts du premier capteur tactile (404) sont entrelacés avec les doigts du deuxième capteur tactile (406) et un rapport entre une aire du premier capteur tactile (404) d'une région et une aire du deuxième capteur tactile (406) de ladite région varie avec la distance par rapport à une première extrémité de ladite région ;
dans lequel les premier et deuxième capteurs tactiles (404, 406) sont :
isolés électriquement l'un de l'autre ;
agencés et construits de sorte que les première et deuxième valeurs de coordonnées du contact soient déterminées sur la base d'une relation entre les signaux provenant desdits au moins premier et deuxième capteurs tactiles (404, 406) ;
un processeur (102) couplé fonctionnellement à l'afficheur (112) et à l'élément de superposition ;
dans lequel, lorsque le contact est détecté par les premier et deuxième capteurs tactiles (404, 406) de la première région et les premier et deuxième capteurs tactiles (404, 406) de la deuxième région, la première coordonnée du contact est déterminée sur la base d'un rapport entre le signal provenant du premier capteur tactile (404) et le signal provenant du deuxième capteur tactile (406) dans l'une des première et deuxième régions, ledit rapport entre les signaux correspondant au rapport entre une aire du premier capteur tactile et une aire du deuxième capteur tactile, et la deuxième coordonnée du contact est déterminée sur la base d'une relation entre les signaux provenant du premier capteur tactile (404) et du deuxième capteur tactile (406) de la première région et les signaux provenant du premier capteur tactile (404) et du deuxième capteur tactile (406) dans la deuxième région adjacente.

3. Dispositif selon la revendication 1 ou la revendication 2, dans lequel, pour chacune des première et deuxième régions (402), le premier capteur tactile (404) s'étend d'une première extrémité de la région (402) et le deuxième capteur tactile (406) s'étend d'une deuxième extrémité de la région (402).

4. Dispositif selon la revendication 1 ou la revendication 2, dans lequel, pour chacune des première et deuxième régions (402), le premier capteur tactile (404) recouvre une majeure partie d'une aire à une première extrémité de la région (402) et le deuxième capteur tactile (406) recouvre une majeure partie d'une aire à une deuxième extrémité de la région (402).

5. Dispositif selon la revendication 1 ou la revendication 2, dans lequel, pour chacune des première et deuxième régions (402), les doigts (408, 412) du premier capteur tactile (404) et du deuxième capteur tactile (406) s'étendent à travers une majeure partie d'une largeur de la région (402).

6. Dispositif selon la revendication 1 ou la revendication 2, dans lequel, pour chacune des première et deuxième régions (402), l'espacement entre les doigts (408) du premier capteur tactile (404) augmente avec la distance par rapport à une première extrémité de la région (402) et l'espacement entre les doigts (412) du deuxième capteur tactile (406) augmente avec la distance par rapport à une deuxième extrémité de la région (402).

7. Dispositif selon la revendication 1 ou la revendication 2, dans lequel, pour chacune des première et deuxième régions (402), au moins un doigt (408) du premier capteur tactile (404) s'étend d'une première extrémité de la région (402).

8. Dispositif selon la revendication 1 ou la revendication 2, dans lequel, pour chacune des première et deuxième régions (402), un premier doigt (408) du premier capteur tactile (404) est plus large à une première extrémité du doigt (408) qu'à une deuxième extrémité du doigt (408).

9. Dispositif selon la revendication 1 ou la revendication 2, dans lequel chacune des première et deuxième régions (402) comprend un troisième capteur tactile (604) qui est isolé électriquement du premier capteur tactile (404) et du deuxième capteur tactile (406).

10. Dispositif selon la revendication 9, dans lequel chacune des première et deuxième régions (402) comprend un quatrième capteur tactile (606) qui est isolé électriquement du premier capteur tactile (404), du deuxième capteur tactile (406) et du troisième capteur tactile (604).

11. Dispositif selon la revendication 1 ou la revendication 2, comprenant un premier conducteur (416) isolé électriquement d'un deuxième conducteur (416), dans lequel le premier conducteur (416) connecte le premier capteur tactile (404) de la première région (402) à un contrôleur (116) et le deuxième conducteur (416) connecte le deuxième capteur tactile (406) de la première région (402) au contrôleur (116), dans lequel le premier conducteur (416) ne passe pas sous le deuxième conducteur (416), et dans lequel le premier conducteur (416) ne passe pas sur le deuxième conducteur (416).
